# EUROPÄISCHE PATENTSCHRIFT

(11) **EP 1 679 498 B1**
(45) Veröffentlichungstag und Bekanntmachung des Hinweises auf die Patenterteilung: **11.03.2009**
(21) Anmeldenummer: 05017824.3
(22) Anmeldetag: 17.08.2005
(51) Int. Cl.: G01L 19/00

(54) **Thermomanometer**
Manometer with temperature sensor
Manomètre avec un capteur de température

(30) Priorität: 08.12.2004 DE 202004018955 U
(43) Veröffentlichungstag der Anmeldung: 12.07.2006
(73) Patentinhaber: AFRISO Euro-Index GmbH für Sicherungsarmaturen und Füllstandsmessung, 74363 Güglingen (DE)
(72) Erfinder: Heinz, Thomas, 74374 Zaberfeld (DE)
(74) Vertreter: Kohler Schmid Möbus

(56) Entgegenhaltungen:
- WO-A-20/04048901
- DE-A1- 19 802 771

## Beschreibung

Die vorliegende Erfindung betrifft ein Thermomanometer mit einem Manometer, welches eine bogenförmige Rohrfeder, deren Inneres an eine Messleitung angeschlossen ist, einen die Rohrfeder tragenden Federträger aus wärmeleitendem Material, in dem die Messleitung verläuft, und ein mit der Rohrfeder bewegungsgekoppeltes Zeigerwerk aufweist, und mit einem Thermometer, welches ein gewickeltes Bimetallelement, das mit dem Fluid in der Messleitung thermisch gekoppelt ist, und einen mit dem Bimetallelement bewegungsgekoppelten Zeiger aufweist.

Bei einem Thermomanometer handelt es sich um ein kombiniertes Messgerät, bei dem über einen Anschluss sowohl Druck als auch die Temperatur übertragen und angezeigt werden.

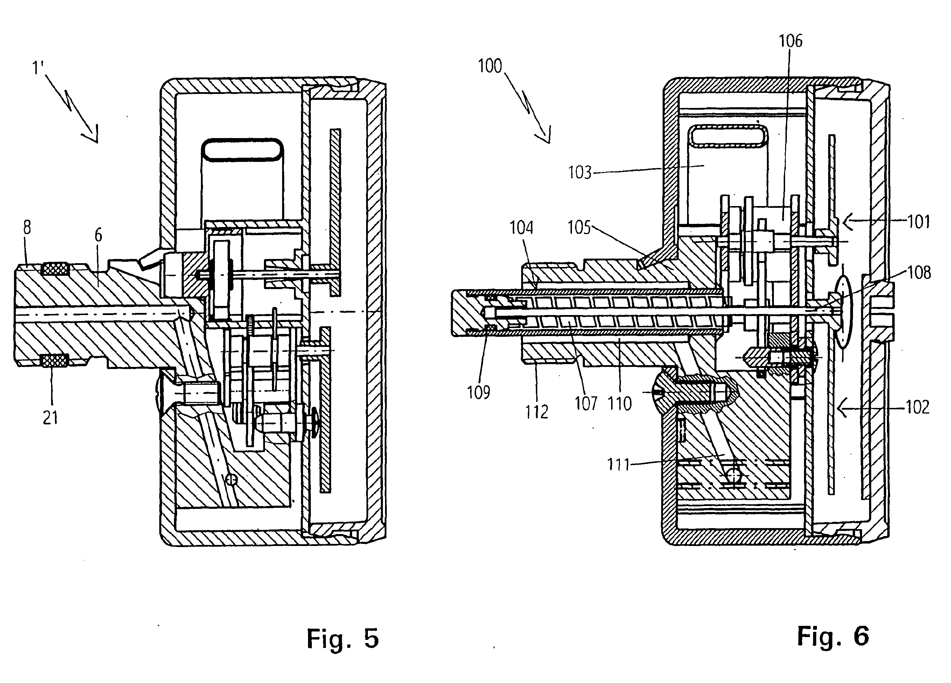

Fig. 6 zeigt ein am Markt befindliches Thermomanometer 100 mit einem Manometer 101 und einem Thermometer 102. Siehe zum Beispiel DE-A-19 802 771. Das Manometer 101 weist eine bogenförmige Rohrfeder 103, deren Inneres an eine Messleitung 104 angeschlossen ist, einen die Rohrfeder 103 tragenden Federträger 105 aus wärmeleitendem Material, in dem die Messleitung 104 verläuft, und ein mit der Rohrfeder 103 bewegungsgekoppeltes Zeigermesswerk 106 auf. Das Thermometer 102 weist ein sich in axialer Richtung erstreckendes wendelförmiges Bimetallelement 107, das mit dem Fluid in der Messleitung 104 thermisch gekoppelt ist, und ein mit dem Bimetallelement 107 bewegungsgekoppeltes Zeigermesswerk 108 auf. Das wendelförmige Bimetallelement 107 ist von einer Fühlerhülse 109 umgeben, die sich unter Ausbildung eines Ringspalts 110 in einer Bohrung des Federträgers 104 befindet. Dieser Ringspalt 110 und eine davon abgehende Bohrung 111 definieren die Messleitung 104, über die das zu messende Medium (z.B. Heißwasser) in das Innere der Rohrfeder 103 geleitet wird. Damit eine Kalibrierung des Thermometers 102 stattfinden kann, ist die Fühlerhülse 109 abgedichtet und zur Justage drehbar ausgeführt. Aufgrund dieser Bauart wird ein spezielles Montageventil (nicht gezeigt) benötigt, das den Schaft der Fühlerhülse 109 entsprechend aufnehmen kann. Bedingt durch diese Anordnung kann der als Anschlussstutzen des Thermomanometers 100 dienende Federträger 105 nicht mit dem für Manometer ansonsten üblichen Standard-Norm-Gewinde (z.B. G1/4 oder G1/8) mit Dichtzapfen nach Norm, sondern nur mit einem deutlich größeren Gewinde 112 (z.B. G3/8 oder G1/2) ausgebildet werden.

Demgegenüber ist es die Aufgabe der vorliegenden Erfindung, ein Thermomanometer der eingangs genannten Art weiter zu miniaturisieren.

Diese Aufgabe wird erfindungsgemäß dadurch gelöst, dass das Bimetallelement spiralförmig ausgebildet und mittels des Federträgers mit dem Fluid in der Messleitung thermisch gekoppelt ist.

Bei dem erfindungsgemäßen Thermomanometer handelt es sich um ein Gerät, das vom Anschluss her mit einem Standard Manometer vergleichbar ist. Dadurch, dass der Federträger über die metallische Wärmeübertragung fast die gleiche Temperatur wie das zu messende Medium hat, wird die Möglichkeit genutzt, die Temperatur des Federträgers als Anzeigegröße zu nutzen (wie bei einem Anliegethermometer). Beim erfindungsgemäßen Thermomanometer wird kein spezielles Messwerk bzw. Gehäuse benötigt, deshalb können ein Standardmesswerk und ein Standardgehäuse verwendet werden. Durch diese Bauart wird keine Fühlerhülse mit entsprechender Abdichtung als Justagemöglichkeit benötigt. Die Kalibrierung von Druck und Temperatur kann außerhalb des Gehäuses erfolgen. Nach der Justage wird das vollständig fertige Meßsystem in das Gehäuse eingesetzt und fixiert.

In einer besonders vorteilhaften Ausführungsform der Erfindung ist das Bimetallelement in einer geschlossenen Kammer angeordnet, die durch den Federträger oder ein darin drehbar gelagertes Justageelement aus wärmeleitendem Material begrenzt ist, welches zur Justage des Zeigers des Thermometers dient. Durch diese Bauart ist keine abzudichtende Fühlerhülse erforderlich.

Vorzugsweise bildet der Federträger den Anschlussstutzen des Thermomanometers, der gemäß DIN EN 837-1 oder als Standard-DIN-Anschluss, insbesondere mit G1/4-oder G1/8-Anschlussgewinde, ausgebildet sein kann. Die Verwendung von spezifischen Montageventilen, wie sie bisher bei herkömmlichen Thermomanometern eingesetzt wurden, ist nicht mehr erforderlich.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1 bis 4: das erfindungsgemäße Thermomanometer in einem Längsschnitt (Fig. 1), in einer Frontansicht (Fig. 2) sowie in einer perspektivischen Ansicht ohne Gehäuse von vorne (Fig. 3) und von hinten (Fig. 4);

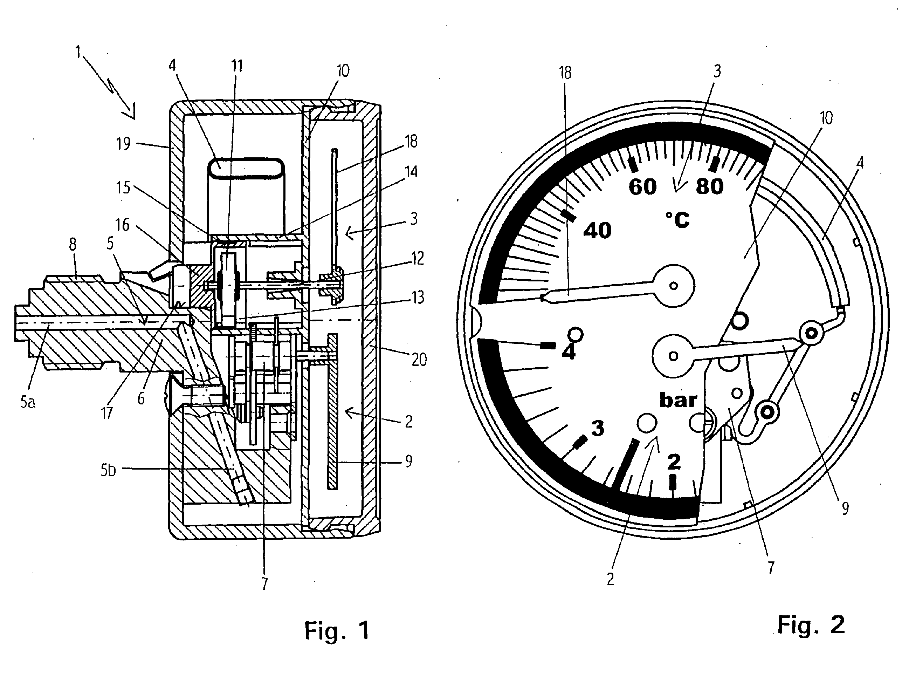

- Fig. 5: eine zweite Ausführungsform des erfindungsgemäßen Thermomanometers in einer Ansicht analog zu Fig. 1; und
- Fig. 6: ein herkömmliches Thermomanometer in einer Ansicht analog zu Fig. 1.

Das in Fign. 1 bis 4 gezeigte Thermomanometer 1 ist ein kombiniertes Messgerät mit einem Manometer 2 und einem Thermometer 3.

Das Manometer 2 weist eine kreisbogenförmige Rohrfeder 4, deren Inneres an eine Messleitung 5 angeschlossen ist, einen die Rohrfeder 4 tragenden Federträger 6 aus wärmeleitendem Material, z.B. aus Messing, in dem die Messleitung 5 verläuft, und ein mit der Rohrfeder 4 bewegungsgekoppeltes Zeigerwerk 7 auf. Das in Fig. 1 linke, rückseitige Ende des Federträgers 6 ist als Anschlussstutzen mit G1/4- oder G1/8-Anschlussgewinde 8 nach DIN EN 837-1 ausgebildet. Die Messleitung 5 ist im Federträger 6 durch eine im Anschlussstutzen verlaufende Bohrung 5a und eine davon abzweigende Bohrung 5b gebildet, über die das zu messende Medium (z.B. Heißwasser) in das Innere der Rohrfeder 4 geleitet wird. Abhängig von dem in der Rohrfeder 4 herrschenden Druck wird das freie Ende der Rohrfeder 4 mehr oder weniger weit ausgelenkt. Diese Auslenkung wird zum Zeigerwerk 7 übertragen und von diesem in eine Drehstellung eines Zeigers 9 umgewandelt, der auf einem Zifferblatt 10 einen zugeordneten Druckwert anzeigt.

Das Thermometer 3 weist ein spiralförmiges Bimetallelement **11** und ein damit bewegungsgekoppeltes Zeigerwerk **12** auf. Das Bimetallelement 11 ist in einer abgeschlossenen Kammer 13 angeordnet, die durch ineinander greifende topfförmige Ansätze 14, 15 des Zifferblatts 10 und eines Justageelements 16 gebildet ist. Das zur Kalibrierung des Thermometers 3 dienende Justageelement 16 ist aus wärmeleitendem Material, z.B. aus Messing, und ohne Spiel in einer Lageraufnahme 17 des Federträgers 6 drehbar gelagert. Der Federträger 6 hat aufgrund seines unmittelbaren Kontakts die gleiche Temperatur wie das zu messende Medium. Die Temperatur des Federträgers 6 wird auf das daran anliegende Justageelement 16 und über dessen topfförmigen Ansatz 15 auf die Kammer 13 und somit auch auf das Bimetallelement 11 übertragen. Das spiralförmige Bimetallelement 11 ist einenends am Ansatz 15 des Justageelements 16 eingehängt und anderenends über eine Buchse mit der Achse eines Zeigers 18 verbunden, der im gezeigten Ausführungsbeispiel das Zeigermesswerk 12 bildet. Bei einer Temperaturänderung kommt es zu einer Drehbewegung des Bimetallelements 11 und somit auch der Achse, was vom Zeiger 18 auf einer entsprechenden Skala des Zifferblatts 10 als Temperaturwert angezeigt wird. Der Ansatz 14 des Zifferblatts 10 ist aus isolierendem Material, wodurch Abwärme aus der Kammer 13 vermieden wird und eine gute Wärmeübertragung vom Federträger 6 auf das Bimetallelement 11 stattfindet. Einflüsse durch unterschiedliche Umgebungstemperaturen werden dadurch auf ein Minimum reduziert.

Das Manometer 2 und das Thermometer 3 sind gemeinsam in einem topfförmigen Standard-Manometergehäuse 19 angeordnet, das mit einer durchsichtigen Scheibe 20 verschlossen ist.

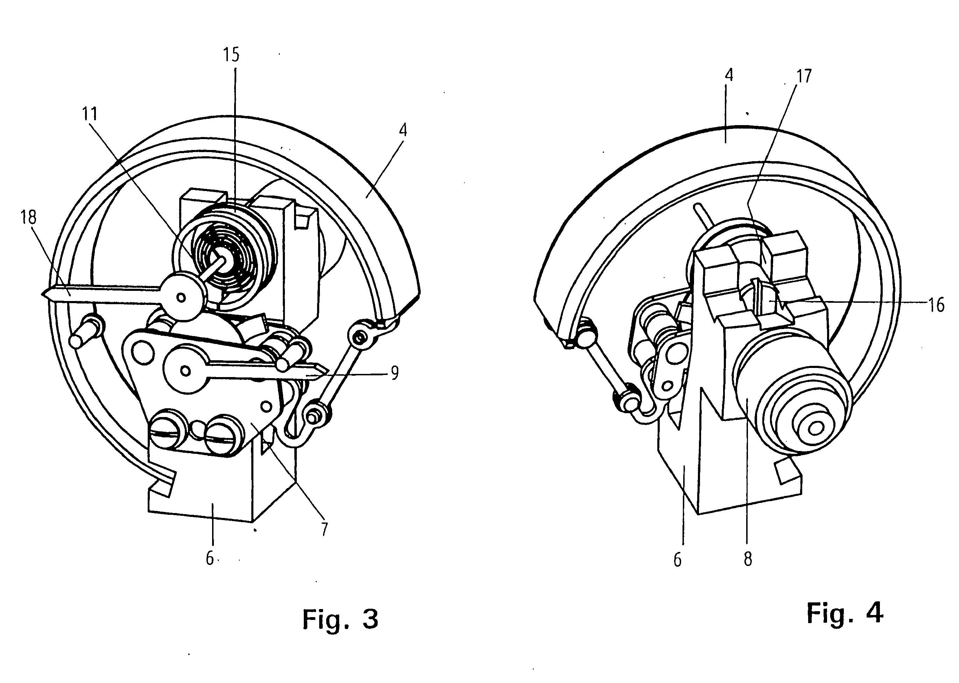

Wie Fig. 4 zeigt, ist die Lageraufnahme 17 rückseitig offen und somit das Justageelement 16 für eine Drehung von außen zugänglich. Dazu weist das Justageelement 16 einen entsprechenden Schlitz zur Betätigung mit einem Schraubendreher auf.

Von diesem Thermomanometer 1 unterscheidet sich das in Fig. 5 gezeigte Thermomanometer 1' allein dadurch, dass das in Fig. 5 linke, rückseitige Ende des Federträgers 6 als Anschlussstutzen mit einem G1/4-Anschlussgewinde 8 und einem zusätzlichen PTFE-Dichtring 21 ausgebildet ist.

## Patentansprüche

1. Thermomanometer (1; 1') mit einem Manometer (2), welches eine bogenförmige Rohrfeder (4), deren Inneres an eine Messleitung (5) angeschlossen ist, einen die Rohrfeder (4) tragenden Federträger (6) aus wärmeleitendem Material, in dem die Messleitung (5) verläuft, und ein mit der Rohrfeder (4) bewegungsgekoppeltes Zeigerwerk (7) aufweist, und mit einem Thermometer (3), welches ein gewickeltes Bimetallelement (11), das mit dem Fluid in der Messleitung (5) thermisch gekoppelt ist, und einen mit dem Bimetallelement (11) bewegungsgekoppelten Zeiger (18) aufweist,
**dadurch gekennzeichnet,**
**dass** das Bimetallelement (11) spiralförmig ausgebildet und mittels des Federträgers (6) mit dem Fluid in der Messleitung (5) thermisch gekoppelt ist.

2. Thermomanometer nach Anspruch 1, **dadurch gekennzeichnet, dass** das Manometer (2) und das Thermometer (3) gemeinsam in einem Manometergehäuse (19) angeordnet sind.

3. Thermomanometer nach Anspruch 1 oder 2, **dadurch gekennzeichnet, dass** der Federträger (6) aus Messing ist.

4. Thermomanometer nach einem der vorhergehenden Ansprüche, **dadurch gekennzeichnet, dass** das Bimetallelement (11) in einer geschlossenen Kammer (13) angeordnet ist, die durch den Federträger (6) oder ein darin drehbar gelagertes Justageelement (16) aus wärmeleitendem Material begrenzt ist, welches zur Justage des Zeigers (9) des Thermometers (3) dient.

5. Thermomanometer nach Anspruch 4, **dadurch gekennzeichnet, dass** das Justageelement (16) mit einem topfförmigen Ansatz (15) die Kammer (13) begrenzt.

6. Thermomanometer nach Anspruch 4 oder 5, **dadurch gekennzeichnet, dass** die Kammer (13) durch einen topfförmigenförmigen Ansatz (14) am Zifferblatt (10) begrenzt ist.

7. Thermomanometer nach einem der Ansprüche 4 bis 6, **dadurch gekennzeichnet, dass** das Justageelement (16) von der Rückseite des Thermomanometers (1) her betätigbar ist.

8. Thermomanometer nach einem der Ansprüche 4 bis 7, **dadurch gekennzeichnet, dass** das Justageelement (16) aus Messing ist.

9. Thermomanometer n**a**ch einem der vorhergehenden Ansprüche, **dadurch gekennzeichnet, dass** der Federträger (6) den Anschlussstutzen des Thermomanometers (1) bildet.

10. Thermomanometer nach Anspruch 9, **dadurch gekennzeichnet, dass** der Federträger (6) als Anschlussstutzen gemäß DIN EN 837-1 ausgebildet ist.

11. Thermomanometer nach Anspruch 9 oder 10, **dadurch gekennzeichnet, dass** der Federträger (6) als Standard-DIN-Anschluss, insbesondere mit einem G1/4- oder G1/8-Anschlussgewinde (8), ausgebildet ist.

## Claims

1. Thermomanometer (1; 1') with a manometer (2), which comprises an arc-shaped tube spring (4), the interior of which is connected to a measurement conduit (5), a spring carrier (6) made of thermally conductive material and carrying the tube spring (4), the measurement conduit (5) extending in the spring carrier, and a pointer mechanism (7) motion coupled with the tube spring (4), and with a thermometer (3), which comprises a coiled bimetallic element (11) being thermally coupled with the fluid in the measurement conduit (5) and a pointer (18) motion coupled with the bimetallic element (11),
**characterized in that**
the bimetallic element (11) is configured in the shape of a spiral and is thermally coupled with the fluid of the measurement conduit (5) by means of the spring carrier (6).

2. Thermomanometer according to claim 1, **characterized in that** the manometer (2) and the thermometer (3) are jointly disposed in a manometer casing (19).

3. Thermomanometer according to claim 1 or 2, **characterized in that** the spring carrier (6) is made of brass.

4. Thermomanometer according to any one of the preceding claims, **characterized in that** the bimetallic element (11) is disposed in a closed chamber (13), which is limited by the spring carrier (6) or an adjustment element (16) of thermally conductive material being rotatably supported therein serving the purpose of adjusting the pointer (9) of the thermometer (3).

5. Thermomanometer according to claim 4, **characterized in that** the adjustment element (16) limits the chamber (13) with a pot-shaped tab (15).

6. Thermomanometer according to claim 4 or 5, **characterized in that** the chamber (13) is limited by a pot-shaped tab (14) on the dial (10).

7. Thermomanometer according to any one of claims 4 to 6, **characterized in that** the adjustment element (16) is operable from the rear side of the thermomanometer (1).

8. Thermomanometer according to any one of claims 4 to 7, **characterized in that** the adjustment element (16) is made of brass.

9. Thermomanometer according to any one of the preceding claims, **characterized in that** the spring carrier (6) forms the adapter of the thermomanometer (1).

10. Thermomanometer according to claim 9, **characterized in that** the spring carrier (6) is configured as an adapter to DIN EN 837-1.

11. Thermomanometer according to claim 9 or 10, **characterized in that** the spring carrier (6) is configured as a standard connector to DIN, having in particular a threaded G1/4 or G1/8 fitting (8).

## Revendications

1. Thermomanomètre (1; 1') avec un manomètre (2), lequel présente un tube - ressort en forme d'arc (4) dont l'intérieur est raccordé à une conduite de mesure (5), un support de ressort (6) en matériau conducteur de la chaleur qui porte le tube - ressort (4) et dans lequel s'étend la conduite de mesure (5) et un mécanisme à aiguille (7) couplé au mouvement du tube - ressort (4) et avec un thermomètre (3) qui présente un élément bimétallique enroulé (11) qui est thermiquement couplé au fluide dans la conduite de mesure (5) et une aiguille (18) couplée au mouvement de l'élément bimétallique, **caractérisé en ce que** l'élément bimétallique (11) est configuré en forme de spirale et est thermiquement couplé au fluide dans la conduite de mesure (5) au moyen du support de ressort (6).

2. Thermomanomètre selon la revendication 1, **caractérisé en ce que** le manomètre (2) et le thermomètre (3) sont disposés ensemble dans un boîtier de manomètre (19).

3. Thermomanomètre selon la revendication 1 ou 2, **caractérisé en ce que** le support de ressort (6) est en laiton.

4. Thermomanomètre selon l'une quelconque des revendications précédentes, **caractérisé en ce que** l'élément bimétallique (11) est disposé dans une chambre fermée (13) qui limitée par le support de ressort (6) ou un élément d'ajustement en matériau conducteur de la chaleur disposé de manière rotative dans celui-ci lequel sert à ajuster l'aiguille (9) du thermomètre (3).

5. Thermomanomètre selon la revendication 4, **caractérisé en ce que** l'élément d'ajustement (16) limite la chambre (13) avec une saillie en forme de pot (15).

6. Thermomanomètre selon la revendication 4 ou 5, **caractérisé en ce que** la chambre est limitée par une saillie en forme de pot (14) au niveau du cadran (10).

7. Thermomanomètre selon l'une quelconque des revendications 4 à 6, **caractérisé en ce que** l'élément d'ajustement (16) peut être actionné à partir du côté arrière du thermomanomètre (1).

8. Thermomanomètre selon l'une quelconque des revendications 4 à 7, **caractérisé en ce que** l'élément d'ajustement (16) est en laiton.

9. Thermomanomètre selon l'une quelconque des revendications précédentes, **caractérisé en ce que** le support de ressort (6) forme le raccord du thermomanomètre (1).

10. Thermomanomètre selon la revendication 9, **caractérisé en ce que** le support de ressort (6) est configuré comme raccord selon la norme DIN EN 837-1.

11. Thermomanomètre selon la revendication 9 ou 10, **caractérisé en ce que** le support de ressort (6) est configuré comme raccord standard DIN, en particulier avec un filetage de raccordement G1/4 ou G1/8.
